# EUROPEAN PATENT APPLICATION

(11) **EP 4 451 453 A1**
(43) Date of publication of application: **23.10.2024**
(21) Application number: 23880225.0
(22) Date of filing: 18.10.2023
(51) Int. Cl.: H01M 50/46, H01M 50/449, H01M 50/414, H01M 50/489, H01M 50/403, H01M 10/42, H01M 4/134, H01M 4/62, H01M 4/38, H01M 10/058

(54) **SECONDARY BATTERY AND METHOD FOR MANUFACTURING SAME**

(30) Priority: 18.10.2022 KR 20220134317; 17.10.2023 KR 20230139006
(71) Applicant: LG Energy Solution, Ltd., Seoul 07335 (KR)
(72) Inventor: SUNG, In Hyouk, Daejeon 34122 (KR); SUNG, Dong Wook, Daejeon 34122 (KR); KA, Kyung Ryun, Daejeon 34122 (KR); KIM, Min Ji, Daejeon 34122 (KR); LEE, Ji Su, Daejeon 34122 (KR)
(74) Representative: Hoffmann Eitle
(86) International application number: PCT/KR2023/016160
(87) International publication number: WO 2024/085648

(57) **Abstract**

Provided is a secondary battery that can increase the adhesive force between the anode and the separator on the electrolyte. According to one aspect of the present disclosure, there is provided a secondary battery including: an anode; a cathode; a separator which is interposed between the anode and the cathode and includes a porous substrate and a coating layer disposed on at least one surface of the porous substrate; and an electrolyte, wherein the anode contains a binder polymer including a first repeating unit, the coating layer includes a second repeating unit, and the first repeating unit and the second repeating unit are bonded to each other.

## Description

### [Technical Field]

The present disclosure claims the benefits of the filing dates of Korean Patent Application No. 10-2022-0134317 submitted to the Korea Intellectual Property Office on October 18, 2022 and Korean Patent Application No. 10-2023-0139006 submitted to the Korea Intellectual Property Office on October 17, 2023, and the entire contents of which are included in the present disclosure.

The present disclosure relates to a secondary battery and a method for manufacturing the same.

### [Background Art]

As representative examples of secondary batteries, lithium-ion batteries are representative energy devices with high energy density that are composed based on a cathode, a separator, an anode, and an electrolyte to enable charging and discharging while chemical energy and electrical energy are being reversibly converted, and are widely used in small-sized electronic equipment such as mobile phones and laptops. Recently, as responses to environmental issues, high oil prices, energy efficiency, and storage, applications to hybrid electric vehicles (HEV), plug-in electric vehicles (plug-in EV), electric bicycles (E-bikes), and energy storage systems (ESS) are rapidly expanding.

Lithium-ion batteries are stable electrochemical devices insulated by a separator, but there is a possibility of heat generation and explosion due to short circuits that occur between the cathode and the anode due to internal or external battery abnormal phenomena or shocks so that ensuring the thermochemical safety of the separator as an insulator is the most important issue to consider.

Meanwhile, silicon is the most promising material among anode active materials having high capacity, and has abundant resources, and when it is reacted with lithium, silicon has a theoretical maximum capacity of 4,200 mAh g⁻¹ (3,579 mAh g⁻¹, @R.T), which is a capacity 10 times or more than graphite; thus development of anode active materials using this is being carried out. However, silicon-based active material particles had problems of deteriorating the lifespan characteristics of the electrode due to structural collapse of the active materials caused by volume expansion of 300% or more when reacting with lithium during the charging process and loss of electrical contact caused by detachment of the active materials from the current collector, and there have been problems in that cracks occurred in the coating layer of the separator during the discharging process, which not only reduced the efficiency of the battery, but also caused cells to deteriorate, thereby increasing resistance.

### [Disclosure]

### [Technical Problem]

An object of the present disclosure is to provide a secondary battery that can increase the adhesive force between the anode and the separator on the electrolyte.

Another object of the present disclosure is to provide a secondary battery that can solve problems such as the fact that the anode is delaminated due to volume expansion of the silicon-based anode active material, and the battery capacity is reduced due to cracks occurred in the coating layer of the separator.

Another object of the present disclosure is to provide a method for manufacturing the secondary battery.

The objects of the present disclosure are not limited to the objects mentioned above, and other objects and advantages of the present disclosure that are not mentioned can be understood by the following description and will be more clearly understood by the embodiments of the present disclosure. Additionally, it will be readily apparent that the objects and advantages of the present disclosure can be realized by means and combinations thereof as set forth in the claims.

### [Technical Solution]

According to a first aspect of the present disclosure for achieving the above object, there is provided a secondary battery including: an anode; a cathode; a separator which is interposed between the anode and the cathode and includes a porous substrate and a coating layer disposed on at least one surface of the porous substrate; and an electrolyte, wherein the anode contains a binder polymer including a first repeating unit, the coating layer includes a second repeating unit, and the first repeating unit and the second repeating unit are bonded to each other. Here, the first and second repeating units being bonded to each other may mean, for example, that each repeating unit is bonded through a covalent bond.

According to a second aspect of the present disclosure, the anode in the first aspect may contain silicon-based active material particles.

According to a third aspect of the present disclosure, the binder polymer in the first or second aspect may include polyacrylamide.

According to a fourth aspect of the present disclosure, the coating layer in any one of the first to third aspects may be disposed between the anode and the porous substrate.

According to a fifth aspect of the present disclosure, the second repeating unit in any one of the first to fourth aspects may be derived from a crosslinking agent.

According to a sixth aspect of the present disclosure, the crosslinking agent in the fifth aspect may be a compound containing a carbon-carbon double bond at both ends.

According to a seventh aspect of the present disclosure, the crosslinking agent in the sixth aspect may be one, or two or more selected from the group consisting of N,N'-methylenebisacrylamide, N,N'-bisacrylylcystamine, and N,N'-diallyltartardiamide.

According to an eighth aspect of the present disclosure, the first repeating unit and the second repeating unit in any one of the first to seventh aspects may form a crosslinked matrix, and the crosslinked matrix may have a degree of crosslinking of 5 to 15%.

According to a ninth aspect of the present disclosure, the adhesive force of the anode to the separator in any one of the first to eighth aspects may be 10 to 15 gf/20 mm.

The second repeating unit in the first to ninth aspects may be the same as or different from the first repeating unit, specifically different therefrom.

According to a tenth aspect of the present disclosure, there is provided a method for manufacturing a secondary battery, the method including steps of: coating a composition for forming a coating layer on at least one surface of a porous substrate and then drying the composition for forming a coating layer to manufacture a separator; and forming an anode of an anode slurry on one surface of the separator, wherein the composition for forming a coating layer includes an initiator and a crosslinking agent, and the anode slurry contains a binder polymer.

According to an eleventh aspect of the present disclosure, a content of the crosslinking agent in the tenth aspect may be 0.01 to 0.10 parts by weight based on 100 parts by weight of the binder polymer.

According to a twelfth aspect of the present disclosure, a content of the binder polymer in the tenth or eleventh aspect is 5 to 15% by weight based on the weight of the total solid content contained in the anode slurry.

According to a thirteenth aspect of the present disclosure, the composition for forming a coating layer in any one of the tenth to twelfth aspects may further include a polymerization reaction catalyst.

According to a fourteenth aspect of the present disclosure, there may be provided a method for manufacturing a secondary battery in any one of the tenth to thirteenth aspects, the method further including steps of: forming a cathode on the other surface of the separator to manufacture an electrode assembly; introducing the electrode assembly into a battery case, and then injecting an electrolyte into the battery case; and putting the battery case into which the electrolyte has been injected into a chamber at 40 to 80°C to perform a crosslinking reaction.

The means for solving the above tasks do not enumerate all the features of the present disclosure. The various features of the present disclosure and advantages and effects according thereto may be understood in more detail by referring to the specific embodiments below.

### [Advantageous Effects]

According to one aspect of the present disclosure, it is possible to provide a secondary battery capable of increasing the adhesive force between the anode and the separator on the electrolyte.

According to another aspect of the present disclosure, it is possible to provide a secondary battery solving a problem of deteriorating the lifespan characteristics of the electrode due to volume expansion of the silicon-based anode active material and a problem of deteriorating battery efficiency due to cracks occurring in the coating layer of the separator during the discharging process.

Specific effects of the present disclosure along with the above-described effects are described together below while explaining specific details for carrying out the invention.

### [Description of Drawings]

FIG. 1 is a schematic diagram of secondary batteries according to Comparative Example and Example.
FIG. 2 is a schematic diagram showing that a binder polymer and a crosslinking agent according to one embodiment of the present disclosure are crosslinked with each other.

### [Mode for Disclosure]

Hereinafter, each configuration of the present disclosure will be described in more detail so that those skilled in the art to which the present disclosure pertains can easily implement the present disclosure, but it is only one example, and the scope of rights of the present disclosure is not limited by the following contents.

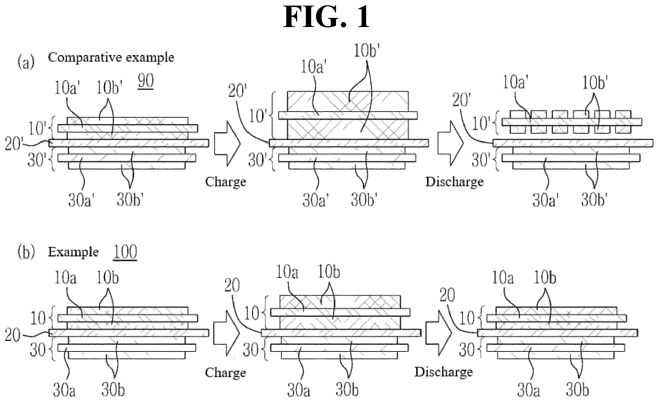

Hereinafter, the configuration of the present disclosure will be described in more detail with reference to FIG. 1.

FIG. 1 is a schematic diagram of secondary batteries according to Comparative Example and Example.

As shown in (a) of FIG. 1, the secondary battery 90 according to the Comparative Example may include: an anode 10' including an anode current collector 10a' and an anode active material layer 10b' disposed on both surfaces of the anode current collector 10a'; a cathode 30' including a cathode current collector 30a' and a cathode active material layer 30b' disposed on both surfaces of the cathode current collector 30a'; and a separator 20' interposed between the anode 10' and the cathode 30'. At this time, during the charging process of the secondary battery, lithium ions are inserted into silicon-based anode active material particles in the anode, and thus a problem of volume expansion of the anode may occur, and during the discharging process, a problem of cracks occurring in the anode active material layer or delamination of the anode may occur.

Referring to (b) of FIG. 1, the secondary battery 100 according to the present disclosure includes an anode 10, a cathode 30, a separator 20 interposed between the anode 10 and the cathode 30, and an electrolyte (not shown).

According to one aspect of the present disclosure, there is provided a secondary battery including: an anode; a cathode; a separator which is interposed between the anode and the cathode and includes a porous substrate and a coating layer disposed on at least one surface of the porous substrate; and an electrolyte, wherein the anode contains a binder polymer including a first repeating unit, the coating layer includes a second repeating unit, and the first repeating unit and the second repeating unit are bonded to each other. Specifically, the second repeating unit may be derived from a crosslinking agent, and the second repeating unit may be the same as or different from the first repeating unit. According to one aspect of the present disclosure, a binder polymer that forms a chemical crosslinking bond with the composition for forming a coating layer is added to the anode slurry, and a crosslinking agent is added to the composition for forming a coating layer so that the binder polymer and the crosslinking agent may react to form a crosslinked matrix on an interface between the anode and the coating layer. The crosslinked matrix is formed on the interface between the anode and the coating layer of the separator so that the adhesive force between the anode and the separator on the electrolyte may be remarkably increased.

### 1. Secondary battery

### Anode 10

The anode 10 according to the present disclosure includes an anode active material that generates electricity by storing or releasing lithium ions coming out of the cathode. The anode active material stores lithium ions in the anode during charging, and moves the lithium ions to the cathode through the electrolyte during discharging, and the electrons separated from the lithium ions move along the conductor and generate electricity.

The anode active material according to the present disclosure may include at least one of silicon-based active material particles and graphite-based active material particles, and may specifically include the silicon-based active material particles. The silicon-based active material particles had problems of deteriorating the lifespan characteristics of the electrode due to structural collapse of the active materials caused by volume expansion of 300% or more when reacting with lithium during the charging process and loss of electrical contact caused by detachment of the active materials from the current collector, and there have been problems in that cracks occurred in the coating layer of the separator during the discharging process, which not only reduced the efficiency of the battery, but also caused cells to deteriorate, thereby increasing resistance. According to one embodiment of the present disclosure, a crosslinked matrix may be formed on the interface between the anode and the coating layer included in the separator to effectively prevent excessive volume expansion of the anode during the charging process, and effectively prevent cracks from occurring in the coating layer of the separator during the discharging process, thereby effectively preventing an increase in resistance due to the deterioration of cells.

For example, one or more selected from the group consisting of Si, SiOₓ (0<x≤2), an Si-C composite, and an Si-Y alloy (Y is any one element selected from the group consisting of alkali metals, alkaline earth metals, transition metals, Group 13 elements, Group 14 elements, and rare earth elements) may be used as the silicon-based active material particles.

The silicon-based active material particles may have an average size D₅₀ of 1 to 100 µm, specifically 5 to 30 µm. When the average size of the silicon-based active material particles satisfies the above numerical range, the battery capacity may be sufficiently increased.

For example, the graphite-based active material particles may include one or more selected from the group consisting of artificial graphite, natural graphite, graphitized carbon fiber, and graphitized mesocarbon microbeads.

For example, the content of the anode active material may be 80 to 97% by weight based on the total solid content contained in the anode active material layer, which will be described later.

The anode according to the present disclosure includes a binder polymer, and the binder polymer may include a first repeating unit. The binder polymer applied to the anode according to the present disclosure can suppress separation between anode active material particles or between the anode active material layer and the current collector. Specifically, the binder polymer may be a rigid type binder capable of reducing volume expansion of the anode, and more specifically, may include a first repeating unit in which a binder monomer is polymerized. Specifically, the first repeating unit acts as a binder in the anode so that it not only can suppress separation between the anode active material particles or between the anode active material layer and the current collector, but also can effectively prevent volume expansion of the silicon-based anode active material particles due to the structural characteristics of the rigid type binder.

Specifically, the binder polymer may include polyacrylamide. Specifically, the polyacrylamide may have a weight average molecular weight M_{w} of 500,000 to 1,500,000 g/mol, and more specifically, 700,000 to 1,000,000 g/mol. Since acrylamide, which is a monomer of polyacrylamide, contains a carbon-carbon double bond (C=C) that can react with a crosslinking agent, a crosslinking reaction with the crosslinking agent may occur through a radical mechanism when an initiator is present.

According to another embodiment of the present disclosure, the binder polymer may further include other binder polymers in addition to polyacrylamide. The other binder polymers may be, for example, poly(vinylidene fluoride co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, styrene-butadiene rubber, carboxyl methyl cellulose, etc., but are not limited thereto.

The anode 10 according to the present disclosure may include an anode current collector 10a and an anode active material layer 10b disposed on at least one surface of the anode current collector 10a. The anode active material layer may contain the anode active material, the conductive material, and the anode binder.

The anode current collector 10a may serve as a path of transferring electrons from the outside so that an electrochemical reaction occurs in the anode active material, or receiving electrons from the anode active material and sending them to the outside. For example, copper, stainless steel, aluminum, nickel, titanium, calcined carbon, or an aluminum or stainless steel surface treated with carbon, nickel, titanium, silver, etc. may be used as the anode current collector, and specifically, a transition metal that adsorbs carbon well, such as copper or nickel, may also be used as a current collector. For example, the anode current collector may have a thickness of 6 µm to 20 µm, but the thickness of the anode current collector is not limited thereto.

The conductive material can improve conductivity between active material particles in the electrode or with metal current collectors and prevent the binder from acting as an insulator. The conductive material may be, for example, one conductive material or mixtures of two or more conductive materials selected from the group consisting of graphite, carbon black, carbon fiber, metal fiber, metal powder, conductive whisker, conductive metal oxide, activated carbon, and polyphenylene derivatives, and more specifically, one conductive material or mixtures of two or more conductive materials selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide.

If necessary, the anode active material layer may further contain an additive. The additive may be, for example, at least one selected from the group consisting of dispersants, plasticizers, antioxidants, lubricants, stabilizers, and antistatic agents.

### Separator 20

Referring to FIG. 1, the separator 20 according to the present disclosure is interposed between the anode 10 and the cathode 30 to be described later, and includes a porous substrate and a coating layer disposed on at least one surface of the porous substrate. Specifically, the coating layer may be disposed between the anode and the porous substrate. The coating layer is disposed between the anode and the porous substrate, thereby forming a crosslinked matrix on the interface between the anode and the coating layer so that the adhesive force of the anode to the coating layer on the electrolyte may be increased.

The coating layer according to the present disclosure is obtained by drying a composition for forming a coating layer, and may include the total solid content excluding the solvent.

The second repeating unit according to the present disclosure may be derived from a crosslinking agent. The second repeating unit may be the same as or different from the first repeating unit, specifically different therefrom.

The composition for forming a coating layer according to the present disclosure includes a crosslinking agent that crosslinks with the binder polymer contained in the anode. The crosslinking agent may form a crosslinked matrix on the interface between the anode and the coating layer by being crosslinking-bonded to the binder polymer contained in the anode. The crosslinked matrix may be formed on the interface between the anode and the coating layer of the separator, thereby remarkably increasing the adhesive force between the anode and the separator on the electrolyte.

Specifically, the crosslinking agent may be a compound containing a carbon-carbon double bond (C=C) at both ends, more specifically, a compound containing a carbon-carbon double bond at both ends and at least one amide group in the internal chain. The crosslinking agent may be, for example, one, or two or more selected from the group consisting of N,N'-methylenebisacrylamide, N,N'-bisacrylylcystamine, and N,N'-diallyltartardiamide, and specifically N,N'-methylenebisacrylamide. According to some embodiments of the present disclosure, when N,N'-methylenebisacrylamide is used as the crosslinking agent, the adhesive force between the anode and the separator may be further increased compared to other types of crosslinking agents.

According to another embodiment of the present disclosure, the first repeating unit and the second repeating unit are bonded to each other to form a crosslinked matrix, and the crosslinked matrix may have a degree of crosslinking of 5 to 15%, specifically 7 to 12%. When the degree of crosslinking of the crosslinked matrix satisfies the above numerical range, the adhesive force for the anode and the separator on the electrolyte may be sufficiently improved, and at the same time, the occurrence of cracks due to shrinkage/expansion of the anode may be suppressed through a chemical crosslinking bond between the anode and the coating layer, and the performance of the secondary battery may be improved. As a method for analyzing the degree of crosslinking of the crosslinked matrix, the Ninhydrin (2,2-dihydroxy-1,3-indanedione) analysis method described in Journal of the Taiwan Institute of Chemical Engineers Volume 72, March 2017, Pages 182-193 may be used. For example, the freeze-dried gel is pulverized into a 5 mg sample. After adding 1 ml of a ninhydrin solution (1.5% (w/v) in ethanol) to the sample, the prepared mixture is heated at 80°C for 25 minutes. After cooling the heated mixture to room temperature for 1 hour, the cooled mixture is diluted with water. Thereafter, the degree of crosslinking of the crosslinked matrix may be calculated by measuring the optical absorbances of the crosslinked gel and the non-crosslinked gel using a PerkinElmer Lambda 35 UV-visible spectrometer at λ = 570 nm. Degree of crosslinking of crosslinked matrix (%) = {1-(absorbance of crosslinked gel/absorbance of non-crosslinked gel)×100}

According to one example, the crosslinked matrix may proceed as shown in Reaction Formula 1 below.

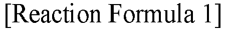

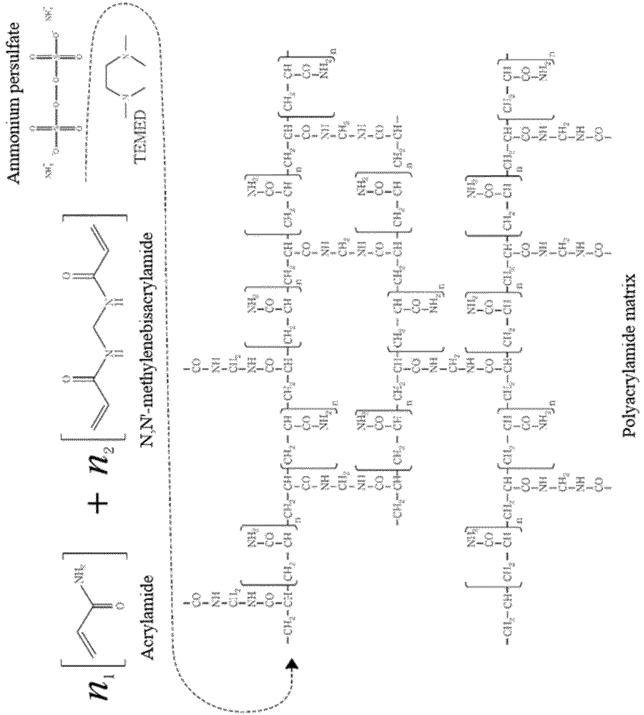

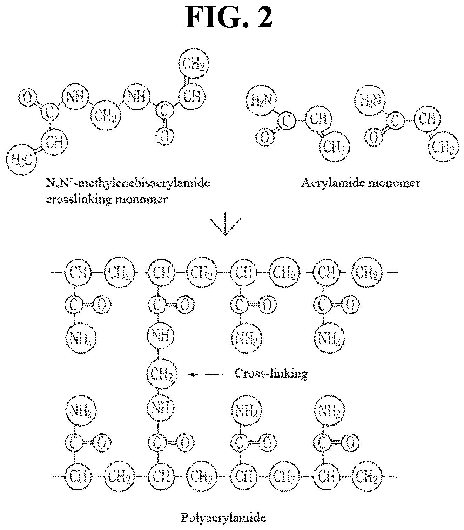

FIG. 2 is a schematic diagram showing that a binder polymer and a crosslinking agent according to one embodiment of the present disclosure are crosslinked with each other.

Referring to Reaction Formula 1 and FIG. 2, under the conditions of an initiator (ammonium sulfate) and a polymerization reaction catalyst (Tetramethylethylenediamine; TEMED), the crosslinked matrix may include a first repeating unit in which acryl amide, which serves as a binder monomer in the anode, is polymerized, and a second repeating unit derived from N,N'-methylenebisacrylamide which serves as a crosslinking agent in the coating layer of the separator.

The coating layer according to the present disclosure may contain inorganic particles that contribute to improving the mechanical strength and heat resistance of a separator for a secondary battery. Specifically, the inorganic particles are not particularly limited as long as they are electrochemically stable. That is, the inorganic particles that can be used in the present disclosure are not particularly limited as long as they do not cause oxidation and/or reduction reactions in the operating voltage range of the secondary battery to which they are applied (e.g., 0 to 5 V based on Li/Li⁺).

As an example, when inorganic particles with a high dielectric constant are used as the inorganic particles, the ionic conductivity of the electrolyte may be improved by contributing to an increase in the degree of dissociation of electrolyte salts, such as lithium salts, in the liquid electrolyte. For the above-mentioned reasons, the inorganic particles may be inorganic particles having a dielectric constant of 5 or more, inorganic particles having lithium ion transfer ability, or a mixture thereof.

The inorganic particles having a dielectric constant of 5 or more may be one, or mixtures of two or more selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, where 0 <x<1), Pb₁₋ₓLaₓZr_{1-y}Ti_{y}O₃ (PLZT, where 0 <x <1, 0 <y <1), (1-x)Pb(Mg_{1/3}Nb_{2/3})O₃₋ₓPbTiO₃ (PMN-PT, where 0 <x <1), HfO₂, SrTiO₃, SnO₂, CeO₂, MgO, NiO, CaO, ZnO, and SiC.

The inorganic particles having the lithium ion transfer ability may be one, or mixtures of two or more selected from the group consisting of lithium phosphate (Li₃PO₄), lithium titanium phosphate (LiₓTi_{y}(PO₄)₃, 0< x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y} series glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x <4, 0 < y < 2), SiS₂ series glass (LiₓSi_{y}S_{z}, 0 < x < 3, 0 < y < 2, 0 < z < 4), and P₂S₅ series glass (LiₓP_{y}S_{z}, 0 < x < 3, 0 < y < 3, 0 < z < 7).

For example, the inorganic particles may have an average particle diameter D₅₀ of 1 nm to 10 µm, specifically 10 nm to 2 µm, and more specifically 50 nm to 1 µm in order to form a uniform thickness coating layer and appropriate porosity. The "average particle diameter D₅₀" refers to a particle diameter at a 50% point of the particle number cumulative distribution according to the particle diameter. The average particle diameter may be measured using a laser diffraction method. Specifically, after dispersing the powder to be measured in a dispersion medium, it is introduced into a commercially available laser diffraction particle size measuring device (e.g., Microtrac S3500) to measure the difference in diffraction patterns according to particle size when the particles pass through the laser beam, thereby enabling the particle size distribution to be calculated.

The porous substrate according to the present disclosure may electrically insulate the anode and the cathode to provide a moving path of lithium ions while preventing short circuits, and may be a porous structure with high resistance to the electrolyte and fine pore diameter.

As a constituent material of the porous substrate, any organic or inorganic material having electrical insulation properties can be used without particular restrictions. The porous substrate may include, for example, at least one selected from the group consisting of polyolefin, polyethylene terephthalate, polybutylene terephthalate, polyacetal, polyamide, polycarbonate, polyimide, polyether ether ketone, polyethersulfone, polyphenylene oxide, polyphenylene sulfide, and polyethylene naphthalene, and may specifically include polyolefin. Polyolefin not only has excellent applicability, but it can also increase the capacity per volume by increasing the ratio of the electrode active material layer in the battery by reducing the thickness of the separator. Specifically, polyolefin may have a weight average molecular weight M_{w} of 100,000 to 500,000 g/mol. If the weight average molecular weight of polyolefin is less than the above numerical range, it may be difficult to secure sufficient mechanical properties, and if it exceeds the above numerical range, the shutdown function may not be implemented or molding may become difficult. The shutdown function refers to a function that blocks the movement of ions and prevents thermal runaway of the battery by dissolving the thermoplastic resin and thus closing the pores of the porous substrate when the temperature of the secondary battery increases.

The porous substrate may have a thickness of, for example, 3 to 12 µm or 5 to 12 µm. If the thickness of the porous substrate is less than the numerical range, the function of the conductive barrier may not be sufficient, and if it exceeds the numerical range, the resistance of the separator may excessively increase.

The pores contained in the porous substrate may have an average diameter of, for example, 10 to 100 nm. The pores contained in the porous substrate are formed in a structure in which the pores are connected to each other, and thus gas or liquid may pass from one surface of the porous substrate to the other surface thereof.

The porosity of the porous substrate is not particularly limited, but may be, for example, 10 to 95%.

### Cathode 30

The cathode 30 according to the present disclosure may include a cathode current collector 30a and a cathode active material layer 30b disposed on at least one surface of the cathode current collector 30a. The cathode active material layer may contain a cathode active material, a conductive material, and a cathode binder.

For example, the cathode current collector is not particularly limited as long as it has high conductivity without causing chemical changes in the battery. Specifically, copper, stainless steel, aluminum, nickel, titanium, calcined carbon, a copper or stainless steel surface treated with carbon, nickel, titanium, silver, etc., an aluminum-cadmium alloy, etc., may be used as the cathode current collector. The cathode current collector may typically have a thickness of 6 to 20 µm.

For example, the cathode active material may include a lithium transition metal oxides. The lithium transition metal oxide may be, for example, one or more selected from the group consisting of Liₓ₁CoO₂ (0.5<x1<1.3), Liₓ₂NiO₂ (0.5<x2<1.3), Liₓ₃MnO₂ (0.5<x3<1.3), Liₓ₄Mn₂O₄ (0.5<x4<1.3), Liₓ₅(Niₐ₁Co_{b1}Mn_{c1})O₂ (0.5<x5<1.3, 0<a1<1, 0<b1<1, 0<c1<1, a1+b1+c1=1), Liₓ₆Ni_{1-y1}Co_{y1}O₂ (0.5<x6<1.3, 0<y1<1), Liₓ₇Co_{1-y2}Mn_{y2}O₂ (0.5<x7<1.3, 0≤y2<1), Liₓ₈Ni_{1-y3}Mn_{y3}O₂ (0.5<x8<1.3, O≤y3<1), Liₓ₉(Niₐ₂Co_{b2}Mn_{c2})O₄ (0.5<x9<1.3, 0<a2<2, 0<b2<2, 0<c2<2, a2+b2+c2=2), Liₓ₁₀Mn_{2-z1}Ni_{z1}O₄ (0.5<x10<1.3, 0<z1<2), Liₓ₁₁Mn_{2-z2}Co_{z2}O₄ (0.5<x11<1.3, 0<z2<2), Liₓ₁₂CoPO₄ (0.5<x12<1.3), and Liₓ₁₃FePO₄ (0.5<x13<1.3).

The conductive material used in the cathode may be the same as or different from the conductive material used in the anode.

For example, the cathode binder may be one, or two or more selected from the group consisting of poly(vinylidene fluoride co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, and carboxyl methyl cellulose, and is not limited to this.

### Electrolyte

The electrolyte according to the present disclosure may include a solvent and a lithium salt.

The solvent according to the present disclosure may be, for example, one, or mixtures of two or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone, ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The lithium salt according to the present disclosure may include anions such as, for example, NO₃⁻, F⁻, Cl⁻, Br⁻, I⁻, and PF₆⁻.

According to another embodiment of the present disclosure, the adhesive force of the anode to the separator may be 10 to 15 gf/20 mm. For example, after putting one separator specimen (5 cm × 5 cm) and one anode with the same size into an aluminum pouch in order to measure the adhesive force, an electrolyte is injected thereinto, and then a crosslinking reaction may be induced in a chamber at 40°C for 30 minutes. Thereafter, the wet adhesive force of the anode to the separator after 1 hour has passed may be measured under the condition of a tensile speed of 150 mm/min using a universal testing machine.

The secondary battery according to the present disclosure may be a cylindrical, prismatic, or pouch-shaped secondary battery, but is not particularly limited as long as it corresponds to a charge/discharge device.

Another embodiment of the present disclosure may provide a battery module including the secondary battery as a unit cell and a battery pack including the same. The battery pack may be used as, for example, a power source for one or more medium-to-large devices selected from the group consisting of: power tools; electric cars including an electric vehicle (EV), a hybrid electric vehicle (HEV), and a plug-in hybrid electric vehicle (PHEV); or power storage systems.

### 2. Manufacturing method of secondary battery

Another embodiment of the present disclosure may provide a method for manufacturing a secondary battery. Explanations that repeat the foregoing parts will be briefly explained or omitted.

The method for manufacturing a secondary battery according to the present disclosure may include steps of: coating a composition for forming a coating layer on at least one surface of a porous substrate and then drying the composition for forming a coating layer to manufacture a separator; and forming an anode of an anode slurry on one surface of the separator.

Specifically, the composition for forming a coating layer includes an initiator and a crosslinking agent.

The initiator according to the present disclosure may initiate a crosslinking reaction between the binder polymer in the anode and the crosslinking agent in the coating layer. The initiator may be, for example, a thermal initiator, and the thermal initiator may be, for example, one, or two or more selected from the group consisting of potassium persulfate, ammonium persulfate, sodium persulfate, and potassium persulfate. For example, the initiator may be contained in an amount of 0.001 to 0.010 parts by weight based on 100 parts by weight of the binder polymer.

The crosslinking agent according to the present disclosure may form a crosslinking bond with the binder polymer in the anode to increase the adhesive force of the anode to the separator, may effectively prevent excessive volume expansion of the anode during the charging process, and may effectively prevent cracks from occurring in the coating layer of the separator during the discharging process, thereby effectively preventing an increase in resistance due to the deterioration of cells.

According to another embodiment of the present disclosure, the crosslinking agent may be contained in an amount of 0.01 to 0.10 parts by weight based on 100 parts by weight of the binder polymer, specifically 0.02 to 0.08 parts by weight, more specifically 0.03 to 0.07 parts by weight, more specifically 0.04 to 0.06 parts by weight, and more specifically 0.05 to 0.06 parts by weight. When the content of the crosslinking agent satisfies the above numerical range, a crosslinking bond progresses sufficiently so that the adhesive force of the separator to the anode on the electrolyte can be sufficiently improved and at the same time, the performance of the secondary battery can be improved.

The composition for forming a coating layer according to the present disclosure may further include a polymerization reaction catalyst that controls the speed of the polymerization reaction. The polymerization reaction catalyst may be, for example, tetramethylethylenediamine (TEMED), etc. For example, the polymerization reaction catalyst may be contained in an amount of 0.001 to 0.010 parts by weight based on 100 parts by weight of the binder polymer.

Specifically, the anode slurry contains a binder polymer. The binder polymer may include polyacrylamide, which suppresses volume change of the anode and can be crosslinking-bonded to a crosslinking agent.

According to another embodiment of the present disclosure, the binder polymer may be contained in an amount of 5 to 15% by weight based on the weight of the total solids contained in the anode slurry, specifically 5 to 12% by weight, more specifically 5 to 10% by weight, and more specifically 5 to 8% by weight. When the content of the binder polymer satisfies the above numerical range, the binder polymer may serve as a binder in the anode to suppress separation between anode active material particles or between the anode active material layer and the current collector, and may sufficiently form a crosslinked bond with the crosslinking agent to effectively prevent volume expansion of silicon-based anode active material particles. Accordingly, the adhesive force of the anode to the coating layer of the separator may be increased.

The method for manufacturing a secondary battery according to the present disclosure may further include steps of: forming a cathode on the other surface of the separator to manufacture an electrode assembly; introducing the electrode assembly into a battery case, and then injecting an electrolyte into the battery case; and putting the battery case into which the electrolyte has been injected into a chamber at 40 to 80°C to perform a crosslinking reaction.

Specifically, the electrode assembly may be a result of pressing a laminated structure laminated in the order of an anode, a separator, and a cathode using a press such as a roll press.

Specifically, a method of placing the battery case into which the electrolyte has been injected into a high temperature chamber may be used as a means to proceed with the crosslinking reaction. The crosslinking reaction may be carried out in a chamber at 40 to 70°C for 10 to 60 minutes, specifically in a chamber at 40 to 60°C for 20 to 40 minutes. When the chamber temperature of the crosslinking reaction satisfies the above numerical range, crosslinking bonding between the binder polymer in the anode and the crosslinking agent in the composition for forming a coating layer may proceed effectively.

Hereinafter, Examples of the present disclosure will be described in detail so that those skilled in the art to which the present disclosure pertains can easily implement the present disclosure, but this is only one example, and the scope of rights of the present disclosure is not limited by the following contents.

### [Preparation of Example 1: Preparation of anode slurry]

### <Preparation of Comparative Example 1: Anode slurry that does not contain PAM binder polymer>

A silicon anode active material (D₅₀=5 µm), a conductive material (graphite), and a binder (CMC:SBR=1:1(w/w)) were put into a solvent (water) at a weight ratio of 90:5:5, and then stirred at 2,000 rpm for 30 minutes to prepare an anode slurry with a total solid content of 50% by weight.

### <Implementation of Preparation of Example 1: Anode slurry containing PAM binder>

An anode slurry was prepared in the same manner as Preparation of Comparative Example 1 except that a binder having carboxymethylcellulose (CMC) (M_{w}=170,000 g/mol), styrene-butadiene rubber (SBR), and polyacrylamide (PAM) (M_{w}=750,000 g/mol) mixed at a weight ratio of 1:1:1, respectively, was used instead of the binder (CMC:SBR=1:1(w/w)).

### [Preparation of Example 2: Preparation of composition for forming coating layer]

### <Preparation of Comparative Example 2: Composition for forming coating layer that does not contain crosslinking agent>

After mixing a particle-type acrylic binder (T_{g} = -20°C) with an average particle diameter of 150 nm and inorganic particles (Al₂O₃) with an average particle diameter D₅₀ of 0.5 µm at a weight ratio of 5:95 (binder:inorganic particles), the mixture was added to a solvent (water) to prepare a binder suspension. A composition for forming a coating layer having a total solid content of 30% by weight was prepared by adding a dispersant to the binder suspension so that the weight ratio of the particle-type acrylic binder and the dispersant (Carboxymethylcellulose; CMC) was 5:5.

### <Implementation of Preparation of Example 2: Composition for forming coating layer containing crosslinking agent>

A composition for forming a coating layer was prepared in the same manner as in Preparation of Comparative Example 2 except that 0.06 parts by weight of a crosslinking agent (N,N'-methylenebisacrylamide), 0.01 parts by weight of an initiator (ammonium persulfate), and 0.005 parts by weight of a polymerization reaction catalyst (Tetramethylethylenediamine; TEMED) were additionally added based on 100 parts by weight of the binder polymer (PAM) according to Implementation of Preparation of Example 1.

### <Implementation of Preparation of Example 2-1: When type of crosslinking agent is different from Implementation of Preparation of Example 2>

A composition for forming a coating layer was prepared in the same manner as in Implementation of Preparation of Example 2 except that N,N'-bisacrylylcystamine was used instead of N,N'-methylenebisacrylamide.

### [Preparation of Example 3: Preparation of separator]

### <Preparation of Comparative Example 3: Separator including coating layer prepared with composition for forming coating layer according to Preparation of Comparative Example 2>

After applying the composition for forming a coating layer according to Preparation of Comparative Example 2 on one surface of a polyethylene porous substrate with a thickness of 10 µm and a porosity of 45% by a slot-die coating method, the composition was dried at 60°C for 30 minutes to form a coating layer with a thickness of 1.5 µm.

### <Implementation of Preparation of Example 3: Separator including coating layer prepared with composition for forming coating layer according to Implementation of Preparation of Example 2>

A separator was prepared in the same manner as in Preparation of Comparative Example 3 except that the composition for forming a coating layer according to Implementation of Preparation of Example 2 was used instead of the composition for forming a coating layer according to Preparation of Comparative Example 2.

### <Implementation of Preparation of Example 3-1: Separator including coating layer prepared with composition for forming coating layer according to Implementation of Preparation of Example 2-1>

A separator was prepared in the same manner as in Implementation of Preparation of Example 3 except that the composition for forming a coating layer according to Implementation of Preparation of Example 2-1 was used instead of the composition for forming a coating layer according to Implementation of Preparation of Example 2.

### [Preparation Example 1: Preparation of anode-separator assembly]

### <Comparative Example 1: PAM binder X in anode + crosslinking agent X in composition for forming coating layer>

### Preparation of anode

The anode slurry according to Preparation of Comparative Example 1 was applied to a 20 µm thick copper thin film (anode current collector) using a doctor blade, and then dried (overnight) at 110°C to prepare a rolled anode (thickness: 130 µm).

### Preparation of anode-separator assembly

The separator according to Preparation of Comparative Example 3 and the rolled anode were stacked in the order and then laminated to prepare an anode-separator assembly. However, the coating layer in the separator was adjusted to be in contact with the rolled anode. After the anode-separator assembly was charged into a battery case (aluminum pouch), an electrolyte was injected. The electrolyte is configured in a solution state in which 1M LiPF₆ is dissolved in a carbonate-based mixed solvent having ethylene carbonate and ethyl methyl carbonate mixed at a volume ratio of 1:1.

### <Comparative Example 2: PAM binder O in anode + crosslinking agent X in composition for forming coating layer>

An anode-separator assembly was prepared in the same manner as Comparative Example 1 except that the anode slurry according to Implementation of Preparation of Example 1 was used instead of the anode slurry according to Preparation of Comparative Example 1.

### <Example 1: PAM binder O in anode + crosslinking agent O in composition for forming coating layer>

An anode-separator assembly was prepared in the same manner as Comparative Example 2 except that the separator according to Implementation of Preparation of Example 3 was used instead of the separator according to Preparation of Comparative Example 3, and the battery case into which the electrolyte was injected was placed in a chamber at 40°C for 30 minutes to induce a crosslinking reaction.

### <Example 2: When type of crosslinking agent is different from Example 1>

An anode-separator assembly was prepared in the same manner as in Example 1 except that the separator according to Implementation of Preparation of Example 3-1 was used instead of the separator according to Implementation of Preparation of Example 3.

### [Experimental Example 1: Evaluation of adhesive force between anode and separator on electrolyte]

A specimen was manufactured by the method according to Preparation Example 1 above. In the case of Example 1, after putting one separator specimen (5 cm ×5 cm) and one anode with the same size into an aluminum pouch, an electrolyte was injected thereinto, and then a crosslinking reaction was induced in a chamber at 40°C for 30 minutes. Thereafter, the wet adhesive force of the anode to the separator after 1 hour has passed was measured under the condition of a tensile speed of 150 mm/min using a universal testing machine.

Meanwhile, in Table 1 below, the contents of the crosslinking agent and polymerization reaction catalyst were set based on 100 parts by weight of the binder polymer (polyacrylamide).

**[Table 1]**

| Classification | Comparative Example 1 | Comparative Example 2 | Example 1 | Example 2 |
|---|---|---|---|---|
| Anode slurry | Preparation of Comparative Example 1 | Implementation of Preparation of Example 1 | Implementation of Preparation of Example 1 | Implementation of Preparation of Example 1 |
| Separator | Preparation of Comparative Example 3 | Preparation of Comparative Example 3 | Implementation of Preparation of Example 3 | Implementation of Preparation of Example 3-1 |
| PAM application in anode | X | O | O | O |
| Crosslinking agent | - | X | 0.06 parts by weight¹⁻¹⁾ | 0.06 parts by weight ¹⁻²⁾ |
| Polymerization reaction catalyst²⁾ | - | X | 0.005 parts by weight | 0.005 parts by weight |
| Adhesive force between anode and separator (gf/20 mm) | 1 | 1 | 15 | 10 |
| 1-1) N,N'-methylenebisacrylamide | | | | |
| 1-2) N,N'-bisacrylylcystamine | | | | |
| 2) Tetramethylethylenediamine (TEMED) | | | | |

Referring to Table 1, it can be confirmed that Example 1 has remarkably high adhesive force of the anode to the coating layer of the separator compared to Comparative Examples 1 and 2. Since the coating layer of the separator and the anode form a crosslinked matrix through chemical crosslinking bonding, it can be inferred that the adhesive force of the anode to the coating layer of the separator is remarkably increased. Comparing Examples 1 and 2 from the perspective of an adhesive force between the anode and the separator according to the type of crosslinking agent in Table 1 above, Example 1, which adopted N,N'-methylenebisacrylamide as a crosslinking agent, showed higher adhesive force between the anode and the separator than Example 2.

Considering the above experimental results comprehensively, according to one aspect of the present disclosure, a binder polymer that forms a chemical crosslinking bond with the composition for forming a coating layer is added to the anode slurry, and a crosslinking agent is added to the composition for forming a coating layer, and thus the binder polymer and the crosslinking agent may react to form a crosslinked matrix on the interface between the anode and the coating layer. The crosslinked matrix is formed on the interface between the anode and the coating layer of the separator, and thus the adhesive force between the anode and the separator on the electrolyte may be remarkably increased.

In addition, according to another aspect of the present disclosure, a crosslinked matrix may be formed on the interface of the anode and the coating layer included in the separator to effectively prevent excessive volume expansion of the anode during the charging process and effectively prevent cracks from occurring in the coating layer of the separator during the discharging process, thereby preventing an increase in resistance due to the deterioration of cells.

Although the preferred embodiments of the present disclosure have been described in detail above, the scope of rights of the present disclosure is not limited thereto, and various modifications and improved forms of those skilled in the art using the basic concept of the present disclosure defined in the following claims also fall within the scope of the rights of the present disclosure.

### [Explanation of reference numerals]

10: Anode
20: Separator
30: Cathode
100: Secondary battery

## Claims

1. A secondary battery comprising: an anode; a cathode; a separator which is interposed between the anode and the cathode and includes a porous substrate and a coating layer disposed on at least one surface of the porous substrate; and an electrolyte,
wherein the anode contains a binder polymer including a first repeating unit, the coating layer includes a second repeating unit, and the first repeating unit and the second repeating unit are bonded to each other.

2. The secondary battery of claim 1, wherein the anode contains silicon-based active material particles.

3. The secondary battery of claim 1, wherein the binder polymer includes polyacrylamide.

4. The secondary battery of claim 1, wherein the coating layer is disposed between the anode and the porous substrate.

5. The secondary battery of claim 1, wherein the second repeating unit is derived from a crosslinking agent.

6. The secondary battery of claim 5, wherein the crosslinking agent is a compound containing a carbon-carbon double bond at both ends.

7. The secondary battery of claim 6, wherein the crosslinking agent is one, or two or more selected from the group consisting of N,N'-methylenebisacrylamide, N,N'-bisacrylylcystamine, and N,N'-diallyltartardiamide.

8. The secondary battery of claim 1, wherein the first repeating unit and the second repeating unit form a crosslinked matrix, and the crosslinked matrix has a degree of crosslinking of 5 to 15%.

9. The secondary battery of claim 1, wherein the adhesive force of the anode to the separator is 10 to 15 gf/20 mm.

10. A method for manufacturing a secondary battery, the method comprising steps of:
coating a composition for forming a coating layer on at least one surface of a porous substrate and then drying the composition for forming a coating layer to manufacture a separator; and
forming an anode of an anode slurry on one surface of the separator,
wherein the composition for forming a coating layer comprises an initiator and a crosslinking agent, and the anode slurry contains a binder polymer.

11. The method of claim 10, wherein a content of the crosslinking agent is 0.01 to 0.10 parts by weight based on 100 parts by weight of the binder polymer.

12. The method of claim 10, wherein a content of the binder polymer is 5 to 15% by weight based on the weight of the total solid content contained in the anode slurry.

13. The method of claim 10, wherein the composition for forming a coating layer further comprises a polymerization reaction catalyst.

14. The method of claim 10, further comprising steps of:
forming a cathode on the other surface of the separator to manufacture an electrode assembly;
introducing the electrode assembly into a battery case, and then injecting an electrolyte into the battery case; and
putting the battery case into which the electrolyte has been injected into a chamber at 40 to 80°C to perform a crosslinking reaction.
